# EUROPEAN PATENT SPECIFICATION

(11) **EP 3 114 035 B1**
(45) Date of publication and mention of the grant of the patent: **31.10.2018**
(21) Application number: 15758265.1
(22) Date of filing: 03.02.2015
(51) Int. Cl.: B65B 5/04, B65B 5/06, B65B 5/10, B65B 35/30, B65D 77/06, B65D 81/02, B65B 35/32, B65B 41/14, B65B 61/10, B65B 55/20

(54) **METHOD FOR PACKING LIQUID POUCHES INTO PACKAGING CARTONS, AND AN ARRANGEMENT FOR PROTECTING THE LIQUID POUCHES**
VERFAHREN ZUM PACKEN VON FLÜSSIGKEITSBEUTELN IN VERPACKUNGSKARTONS UND ANORDNUNG ZUM SCHUTZ DER FLÜSSIGKEITSBEUTEL
PROCÉDÉ PERMETTANT D'EMBALLER DES POCHES DE LIQUIDE DANS DES CARTONS D'EMBALLAGE, ET AGENCEMENT PERMETTANT DE PROTÉGER LES POCHES DE LIQUIDE

(30) Priority: 04.03.2014 FI 20145203
(43) Date of publication of application: 11.01.2017
(73) Proprietor: Elecster OYJ, 37801 Akaa (FI)
(72) Inventor: HALONEN, Jukka, FI-37800 Akaa (FI); KAUKONEN, Pertti, FI-37800 Akaa (FI); PELKONEN, Sami, FI-37550 Lempäälä (FI); VIERIMAA, Harri, FI-37800 Akaa (FI)
(74) Representative: Heinänen Oy Patent Agency
(86) International application number: PCT/FI2015/050069
(87) International publication number: WO 2015/132454

(56) References cited:
- EP-A1- 0 042 199
- EP-A1- 0 230 756
- WO-A1-2010/100327
- DE-A1-102008 039 099
- DE-A1-102008 039 099
- FI-B- 122 024
- US-A1- 2003 087 051

## Description

The object of the present invention is a method for packing liquid pouches, e.g. pouches of milk, into packaging cartons, in which method the liquid pouches are transferred to a packing station, where they are dropped into packaging cartons in liquid pouch groups. The object of the invention is also an arrangement for protecting the liquid pouches in the packing phase.

The invention thus relates to the packing of liquid pouches. The term liquid pouches refers to pouches containing liquid that are manufactured from a film-type material. The liquid can be milk, buttermilk, juice or corresponding. The film-type material generally in question is a polyolefin, e.g. polyethylene or a K-polymer of polyethylene, or possibly nylon or some corresponding material. Liquid pouch thus refers also in the claims to a pouch that easily changes its shape and that contains liquid.

Liquid pouches are manufactured in a machine, in which the film-type material is discharged from a roller disposed in the machine, is folded into a pouch, seamed at the bottom end, filled with the desired liquid, seamed and truncated at the top end, in which case a finished liquid pouch is formed. The manufacturing machine of a liquid pouch is not described in more detail in this context because it can be any prior-art machine whatsoever that is suited for this purpose. The invention relates to the packing of finished liquid pouches coming from the machine.

The liquid pouches are transported from their manufacturing machine by means of conveyors and finally dropped in the packing station into packaging cartons, which in turn travel on their own conveyor. A packaging carton is generally a cardboard carton, but other packagings are, of course, possible within the scope of the invention. The number of liquid pouches in each carton is limited, of course, by their weight. A one-liter pouch weighs approx. 1 kg. In many countries a maximum weight, which e.g. an employee of a factory or shop may lift, is defined. This weight is often approx. 8-12 kg, which thus dictates the number of liquid pouches in each carton.
When the pouches are dropped freely from a conveyor into a carton, they drop into an arbitrary attitude and location in the carton. There are many factors affecting the attitude in which a pouch finally drops into a carton. The biggest effective factor is the attitude in which the pouch starts its dropping motion. Another important factor is the dropping height, which it is preferable to keep as small as possible.
Nowadays the pouches can be collected into groups in the packing station before being dropped as a single group into a packaging carton (see e.g. EP 0 230 756). The size of a group can vary and the pouches can be in a vertical attitude or in a horizontal attitude in it, and there can be the desired number of them side-by-side and consecutively.

Some publications relating to the packing of liquid pouches are e.g. Finnish patent FI 122024 and Finnish patent application FI 20095210.
When a liquid pouch drops into a packaging carton, in particular the pouches hitting against the inside edges of the packaging carton are at risk of being damaged. Especially when dropping pouches in a vertical attitude into a packaging carton, a particularly critical point is the bottom corner of the liquid pouch, which during the dropping rubs against the inside surface of the packaging carton. The bottom corner folds when friction is exerted on it during the dropping. More particularly, it is precisely the area of the bottom corner where leakage points have been detected more often than usual. In addition, the top edge of the packaging carton is sharp and a pouch can be damaged when hitting it.

The aim of the present invention is to achieve a method with which the drawback described in the preceding can be avoided and the durability of the pouches improved. The method according to the invention is characterized in that dropped into the packaging carton along with the liquid pouches is a film, more particularly a plastic film, which is cut before the dropping, and with which film the liquid pouch group is protected on at least some of its surfaces during the dropping and which in the packaging carton settles between the liquid pouches and the inside surfaces of the packaging carton.

One preferred embodiment of the method according to the invention is characterized in that the cutting of the film is performed by heat sealing and by exerting a tearing motion on the film.

Another preferred embodiment of the method according to the invention is characterized in that the film is pulled from the film roller onto the packing table to above the aperture in the table and is cut, after which the packing group that has been assembled above the packing table is dropped, together with the film, through the aperture into the packaging carton below.

The arrangement according to the invention is characterized in that in the packing station are arranged devices for pulling the film from the film roller and for cutting it to the specified dimension before the dropping of the liquid pouches into a packaging carton, and in that in the packing station is a packing table, onto which the film is spread and cut before the dropping of the liquid pouches, and in that the packing table has an aperture, via which the liquid pouches and film are together dropped into a packaging carton.

One preferred embodiment of the arrangement according to the invention is characterized in that the arrangement also comprises a film gripper, with which the film can be held in its position and can be released before dropping.

Yet another preferred embodiment of the arrangement according to the invention is characterized in that the arrangement comprises a film-spreading device, which straightens the film into an attitude wherein the film-holding device gets a grip on the film.

One advantage of the invention that can be mentioned is that the intermediate film protects the liquid pouches from stresses during the dropping, such as from friction and sharp edges. The intermediate film also helps the liquid pouches to stay in order during the dropping, in which case the cartons are filled evenly and later handling of the cartons is easier. In addition, the lower friction of an intermediate film, more particularly compared to a cardboard box, facilitates removal of the liquid pouches from the carton.

In the following, the invention will be described in more detail by the aid of some preferred embodiments with reference to the attached drawings, wherein
- Fig. 1: presents a packing station of liquid pouches.
- Fig. 2: presents one detail of the packing station.
- Fig. 3: presents another detail of the packing station.

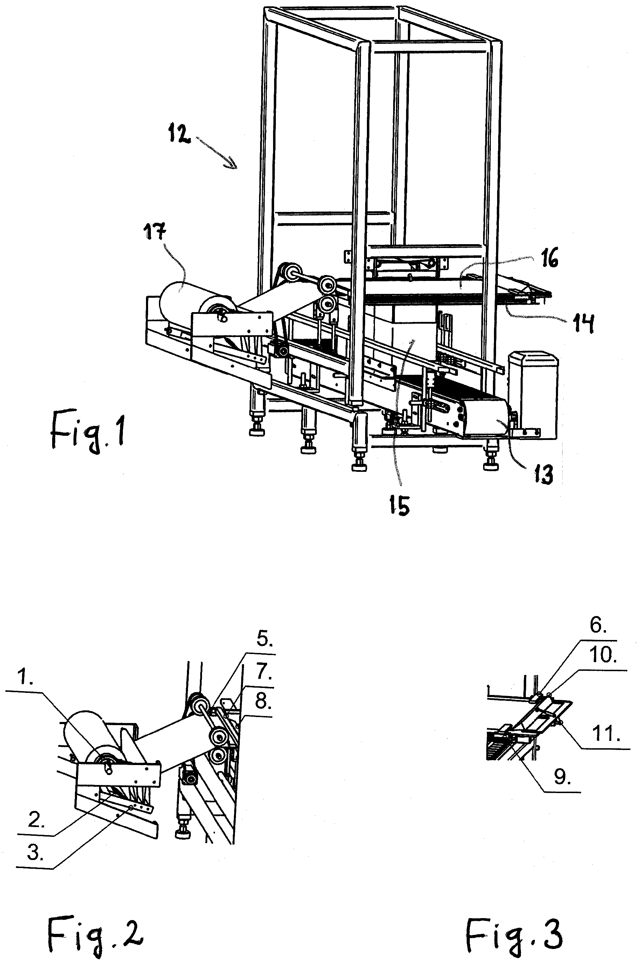

Fig. 1 presents a packing station 12 of liquid pouches, to which packing station the finished liquid pouches are brought on a conveyors. The conveyors are not presented in this context, but examples of them can be found e.g. in Finnish patent FI 122024 and Finnish patent application FI 20095210. In the bottom part of the packing station is a conveyor 13, which conveys the packaging cartons 15 to the packing station and away from it. The liquid pouches are dropped into packaging cartons 15 one at a time or in groups through an aperture in the packing table 14. It is advantageous to form a group from the pouches above the packing table and to drop the whole group in one go into the packaging carton.

What is novel in the invention is that film 16 from the film roller 17 is spread onto the packing table, the film is cut in such a way that a detached sheet of film remains on the packing table covering at the same time an aperture in the table, and the liquid pouches are dropped into the packaging carton 15 in such a way that the film 16 drops along with the pouches. The size of the film is sufficiently large for it to surround the pouches or the pouch group for the whole of their height in the packaging carton, in which case no contact between a liquid pouch and an inside surface of the packaging carton occurs at any point. This film 16 settling between the liquid pouches and the inside surface of the packaging carton thus protects the liquid pouches, not only during the dropping but also during transportation, and thus reduces damaging of the liquid pouches. The film 16 does not indeed always need to be so wide/long that it protects the whole of the side(s) of a liquid pouch. The highest pressure and stress is in the bottom part of the pouch. The liquid in a pouch tries to form a drop shape and what is most essential is to protect the portion of it where the surface pressure, and consequently friction, is greatest.

The film is preferably plastic film, but also other materials suited to the purpose can be used. The film-pulling apparatus pulls the film 16 from the roller 17 and cuts the film into suitably long sheets, along with which the liquid packages are dropped into a packaging carton 15.

The plastic film 16 to be used is discharged from the roller 17 with an unwinder 1, which in this case is a shaft disposed in a fork. The film roller is installed on the shaft and locked. The shaft is mounted on bearings, in which case it rotates easily when pulling the film, and does not cause stretching of the film. Owing to inertia forces, the film roller 17 tries to rotate a little itself after cessation of the pulling of the film. To avoid unintended over-rotation, the unwinder has a roller brake 2. A simple band brake can be used as a roller brake. The band brake can be statically or dynamically loaded. With a dynamically-loaded brake the rotation of the film roller and unintended stretching of the film can be prevented better. In this case the operation of the dynamic brake is linked to the operation of a film loosener 3. A cylinder solution is used as the film loosener 3, wherein a part of the cylinders is rigidly installed and the other part of the cylinders is disposed at the end of a rocker arm. In this case the movement of the rocker releases and tightens the roller brake. The motion of the rocker reduces the moment of inertia of the film roller and, on the other hand, the force exerted by the fast-acting film-pulling device 4 by distributing the pulling over a longer time, in which case hard stretching is not exerted on the film. The film-pulling device is formed from pulling cylinders, which are driven in this case with a servomotor (not presented).

During the pulling and cutting of the film there are many situations when the film might be driven out from the claws of the film-holding device 6. For this reason it is good to have for the film a film-spreading device 5, which straightens the film into an attitude in which the film-holding device gets a grip. In this case the spreading takes place on the ejector-type principle. The film-holding device 6 is, at its simplest, a pincer-type gripper, which in this case is provided with a pneumatic actuator. The task of the film-holding device 6 is to keep hold of the film when the film-displacing device 9 makes its work movement. After this the film-holding device 6 releases its grip and returns to the home station to await a new work cycle. The film-displacing device 9 is a linear actuator, which can be pneumatic or electrically driven. The film 16 can also be straightened with compressed air, in which case the film-holding device 6 gets a grip on the film.

The film-displacing device 9 pulls the film to above the packaging carton 5 to await the dropping of the liquid packages into the packaging carton. Before the dropping of the liquid packages into a packaging carton, the film-displacing device 9 returns to the home station and the film 16 coming from the roller 17 is cut to its dimensions with the cutting device 7. The cutting in the cutting device in this case takes place by means of heat.

Static electricity is very easily produced when handling plastic film, which static electricity is very harmful when handling extremely thin plastic film. More particularly, after the cutting of the film 16, when the thin film is in sheet form, static electricity causes side effects. For this reason, downstream of the cutting device is a device 8 for eliminating static electricity.

Cutting the plastic film 16 into sheets requires special procedures. Cutting the film does not necessarily succeed perfectly on each time of cutting, in which case the film does not go evenly along with the liquid packages into the carton. At worst, a film that has gone into a poor attitude does not protect a liquid package at all points, which increases the risk of damage to the liquid package. After the film 16 is brought by the film-displacing device to await the dropping of the liquid packages, the film gripper 10 takes hold of the film. This also enables the return of the film-displacing device 9 to the home station. More important, however, is that the operation of the film gripper 10 is linked to the operation of the film-tearing device 11, which ensures cutting of the plastic film in every situation. The film gripper 10 is a certain pincer-type gripper device, which makes a linear movement as a result of the film-tearing device 11. In this case both devices are pneumatic. Tearing of the film is also associated with the reversing motion made by the film-pulling device. The film gripper 10 releases the film 16 just before the dropping.

It is obvious to the person skilled in the art that the invention is not limited to the embodiments presented above, but that it can be varied within the scope of the claims presented below. In the preceding the invention is described in connection with cardboard packaging, in which it is certainly of great advantage. Nothing, however, prevents its use in connection with some other type of packaging, such as plastic cartons. The film 16 does not always need to be so wide that it protects the whole side of a liquid pouch. The highest pressure and stress is in the bottom part of the pouch. The liquid in a pouch tries to form a drop shape and what is most essential is to protect that portion where the surface pressure, and consequently friction, is greatest.

The characteristic features possibly presented in the description in conjunction with other characteristic features can also, if necessary, be used separately to each other.

## Claims

1. Method for packing liquid pouches, e.g. pouches of milk, into packaging cartons (15), in which method the liquid pouches are transferred to a packing station (12), where they are dropped into packaging cartons (15) in liquid pouch groups, **characterized in that** a film (16), more particularly a plastic film, is dropped into a packaging carton (15) along with the liquid pouches, which film is cut before the dropping, and with which film the liquid pouch group is protected on at least some of its surfaces during the dropping and which in the packaging carton (15) settles between the liquid pouches and the inside surfaces of the packaging carton (15).

2. Method according to claim 1, **characterized in that** the cutting of the film is performed by heat sealing and by exerting a tearing motion on the film.

3. Method according to claim 1 or 2, **characterized in that** the film (16) is pulled from the film roller (17) onto the packing table (14) to on top of an aperture in the table and is cut, after which the liquid pouch group that has been assembled above the packing table is dropped, together with the film, through the aperture into the packaging carton (15) below.

4. Arrangement for protecting liquid pouches in the packing phase, which arrangement comprises a packing station (12) for the liquid pouches, in which packing station the liquid pouches are dropped in groups into a packaging carton (15), **characterized in that** in the packing station (12) are arranged devices (4, 7) for pulling a film (16) from a film roller (17) and for cutting it to the specified dimension before the dropping of the liquid pouches into the packaging carton (15), and **in that** the packing station (12) has a packing table (14), onto which the film (16) is spread and cut before the dropping of the liquid pouches, and **in that** in the packing table (14) is an aperture, via which the liquid pouches and film (16) are together dropped into a packaging carton (15).

5. Arrangement according to claim 4, **characterized in that** the arrangement also comprises a film gripper (10), with which the film (16) can be held in its position and can be released before dropping.

6. Arrangement according to claim 4 or 5, **characterized in that** the arrangement comprises a film-spreading device (5), which straightens the film (16) into an attitude wherein the film-holding device (6) gets a grip on the film (16) when the film-displacing device (9) makes its working motion.

7. Arrangement according to claim 4 or 5, **characterized in that** the arrangement comprises a compressed air device, which straightens the film (16) into an attitude wherein the film-holding device (6) gets a grip on the film (16) when the film-displacing device (9) makes its working motion.

## Patentansprüche

1. Verfahren zum Verpacken von Flüssigkeitsbeuteln, z.B. Milchbeuteln, in Verpackungskartons (15), wobei die Flüssigkeitsbeutel zu einer Packstation (12) transportiert werden, wo sie in Flüssigkeitsbeuteleinheiten in Verpackungskartons (15) fallengelassen werden, **dadurch gekennzeichnet, dass** eine Folie (16), insbesondere eine Plastikfolie, zusammen mit den Flüssigkeitsbeuteln in einen Verpackungskarton (15) fallengelassen wird, wobei die Folie vor dem Fallenlassen geschnitten wird und die Flüssigkeitsbeuteleinheit während des Fallens auf mindestens einigen seiner Flächen schützt und sich im Verpackungskarton (15) zwischen die Flüssigkeitsbeutel und die Innenflächen des Verpackungskartons (15) legt.

2. Verfahren nach Anspruch 1, **dadurch gekennzeichnet, dass** das Schneiden der Folie durch Heißsiegeln und Ausüben einer Zugbewegung auf die Folie erfolgt.

3. Verfahren nach Anspruch 1 oder 2, **dadurch gekennzeichnet, dass** die Folie (16) von der Folienrolle (17) über eine Öffnung im Packtisch (14) gezogen und geschnitten wird, wonach die über dem Packtisch zusammengestellte Flüssigkeitsbeuteleinheit zusammen mit der Folie durch die Öffnung in den darunter befindlichen Verpackungskarton (15) fallengelassen wird.

4. Einrichtung zum Schützen von Flüssigkeitsbeuteln während der Verpackungsphase, wobei diese Einrichtung eine Packstation (12) für die Flüssigkeitsbeutel enthält, in der die Flüssigkeitsbeutel in Einheiten in einen Verpackungskarton (15) fallengelassen werden, **dadurch gekennzeichnet, dass** in der Packstation (12) Vorrichtungen (4,7) angeordnet sind zum Ziehen einer Folie (16) von einer Folienrolle (17) und Schneiden derselben auf ein vorgegebenes Maß, bevor die Flüssigkeitsbeutel in den Verpackungskarton (15) fallengelassen werden, und dadurch, dass die Packstation (12) einen Packtisch (14) aufweist, auf dem vor dem Fallenlassen der Flüssigkeitsbeutel die Folie (16) ausgebreitet und geschnitten wird, und dadurch, dass im Packtisch (14) eine Öffnung ist, durch welche die Flüssigkeitsbeutel und die Folie (16) zusammen in einen Verpackungskarton (15) fallengelassen werden.

5. Einrichtung nach Anspruch 4, **dadurch gekennzeichnet, dass** die Einrichtung auch einen Foliengreifer (10) umfasst, welcher die Folie (16) in ihrer Position halten und vor dem Fallen loslassen kann.

6. Einrichtung nach Anspruch 4 oder 5, **dadurch gekennzeichnet, dass** die Einrichtung eine Vorrichtung (5) zum Ausbreiten der Folie enthält, welche die Folie (16) so strafft, dass der Folienhalter (6) auf die Folie (16) zugreift, wenn die Vorrichtung (9) zum Ausbreiten der Folie ihre Arbeitsbewegung ausführt.

7. Einrichtung nach Anspruch 4 oder 5, **dadurch gekennzeichnet, dass** die Einrichtung eine Druckluftvorrichtung enthält, welche die Folie (16) so strafft, dass der Folienhalter (6) auf die Folie (16) zugreift, wenn die Vorrichtung (9) zum Ausbreiten der Folie ihre Arbeitsbewegung ausführt.

## Revendications

1. Procédé pour emballer des sachets de liquide, par exemple des sachets de lait, dans des cartons d'emballage (15), selon lequel les sachets de liquide sont transférés dans un poste d'emballage (12), où ils sont déposés dans des cartons d'emballage (15) par groupes de sachets de liquide,
**caractérisé en ce qu'**un film (16), plus spécialement un film de plastique, est déposé avec les sachets de liquide dans un carton d'emballage (15), lequel film est coupé avant d'être déposé, protège le groupe de sachets de liquide sur certaines au moins des surfaces dudit groupe quand il est déposé, et, dans le carton d'emballage (15), se place entre les sachets de liquide et les surfaces intérieures du carton d'emballage (15).

2. Procédé selon la revendication 1, **caractérisé en ce que** la découpe du film est réalisée par thermoscellage et grâce à une force de déchirement exercée sur le film.

3. Procédé selon la revendication 1 ou 2, **caractérisé en ce que** le film (16) est déroulé du rouleau de film (17) jusqu'à la table d'emballage (14), en haut d'une ouverture prévue dans celle-ci, après quoi le groupe de sachets de liquide qui a été formé au-dessus de la table d'emballage est déposé avec le film, par l'ouverture, dans le carton d'emballage (15) qui se trouve au-dessous.

4. Installation pour protéger des sachets de liquide lors de la phase d'emballage, laquelle installation comprend un poste d'emballage (12) pour les sachets de liquide, dans lequel les sachets de liquide sont déposés par groupes dans un carton d'emballage (15),
**caractérisée en ce que** dans le poste d'emballage (12) sont disposés des dispositifs (4, 7) pour dérouler un film (16) d'un rouleau de film (17) et pour le couper aux dimensions spécifiées, avant de déposer les sachets de liquide dans le carton d'emballage (15), **en ce que** le poste d'emballage (12) a une table d'emballage (14) sur laquelle le film (16) est étalé et coupé avant que les sachets de liquide ne soient déposés, et **en ce qu'**il est prévu dans la table d'emballage (14) une ouverture par laquelle les sachets de liquide et le film (16) sont déposés ensemble dans un carton d'emballage (15).

5. Installation selon la revendication 4, **caractérisée en ce qu'**elle comprend également un organe de préhension pour film (10) avec lequel le film (16) peut être maintenu dans sa position et peut être libéré avant d'être déposé.

6. Installation selon la revendication 4 ou 5, **caractérisée en ce qu'**elle comprend un dispositif d'étalement de film (5) qui tend le film (16) jusqu'à une position dans laquelle le dispositif de retenue de film (6) peut agir sur le film (16) quand le dispositif de déplacement de film (9) décrit son mouvement de travail.

7. Installation selon la revendication 4 ou 5, **caractérisée en ce qu'**elle comprend un dispositif à air comprimé qui tend le film (16) jusqu'à une position dans laquelle le dispositif de retenue de film (6) peut adhérer au film (16) quand le dispositif de déplacement de film (9) décrit son mouvement de travail.
